# EUROPÄISCHE PATENTSCHRIFT

(11) **EP 4 154 335 B1**
(45) Veröffentlichungstag und Bekanntmachung des Hinweises auf die Patenterteilung: **13.12.2023**
(21) Anmeldenummer: 21802216.8
(22) Anmeldetag: 25.10.2021
(51) Int. Cl.: H01M 8/0267, H01M 8/0258, H01M 8/0254, H01M 8/0265

(54) **BIPOLARPLATTE UND BRENNSTOFFZELLENSTAPEL**
BIPOLAR PLATE AND FUEL CELL STACK
PLAQUE BIPOLAIRE ET EMPILEMENT DE PILES À COMBUSTIBLE

(30) Priorität: 28.10.2020 DE 102020128310
(43) Veröffentlichungstag der Anmeldung: 29.03.2023
(73) Patentinhaber: Audi AG, 85057 Ingolstadt (DE)
(72) Erfinder: KEITSCH, Oliver, 74076 Heilbronn (DE); SIEBEL, Armin, 74172 Neckarsulm (DE); VOIGT, Sebastian, 74074 Heilbronn (DE)
(74) Vertreter: Hentrich Patent- & Rechtsanwaltspartnerschaft mbB
(86) Internationale Anmeldenummer: PCT/EP2021/079463
(87) Internationale Veröffentlichungsnummer: WO 2022/090119

(56) Entgegenhaltungen:
- EP-A1- 2 348 567
- DE-A1-102014 206 333
- US-A1- 2003 215 695
- US-A1- 2010 028 742
- US-A1- 2019 288 302

## Beschreibung

Die Erfindung betrifft eine Bipolarplatte, die aus zwei miteinander verbundenen Einzelplatten gebildet ist, welche an ihren voneinander wegweisenden Plattenoberflächen jeweils mit einem Reaktantenflussfeld gebildet sind. Jedes Reaktantenflussfeld umfasst mehrere durch Wandungen von Stegen begrenzte Strömungskanäle für ein Reaktionsmedium, wobei die Stege und die Strömungskanäle der Einen der Einzelplatten in einem aktiven Bereich gegenüberliegend zu den Stegen und den Strömungskanälen der Anderen der Einzelplatten verlaufen, um so Kühlmittelkanäle eines sich zwischen den Einzelplatten erstreckenden Kühlmittelflussfelds zu bilden. Die Reaktantenflussfelder und das Kühlmittelflussfeld sind jeweils über einen außerhalb des aktiven Bereichs liegenden Verteilbereich mit einem jeweils zugehörigen Medienport strömungsmechanisch verbunden. In dem Verteilbereich liegt eine sich bereichsweise überkreuzende Führung der beiden Reaktionsmedien vor, damit eine Vergleichsmäßigung der Verteilung des jeweiligen Betriebsmediums auf das Flussfeld ausgehend vom jeweiligen Medienport herbeigeführt werden kann. Die Erfindung betrifft außerdem einen Brennstoffzellenstapel mit einer Mehrzahl an Brennstoffzellen, denen derartige Bipolarplatten zugeordnet sind.

Brennstoffzellenvorrichtungen werden für die chemische Umsetzung eines Brennstoffs mit Sauerstoff zu Wasser genutzt, um elektrische Energie zu erzeugen. Hierfür enthalten Brennstoffzellen als Kernkomponente die sogenannte Membran-Elektroden-Einheit (MEA für membrane electrode assembly), die ein Verbund aus einer protonenleitenden Membran und jeweils einer, beidseitig an der Membran angeordneten Elektrode (Anode und Kathode) ist. Zudem können Gasdiffusionslagen (GDL) beidseitig der Membran-Elektroden-Einheit an den der Membran abgewandten Seiten der Elektroden angeordnet sein. Im Betrieb der Brennstoffzellenvorrichtung mit einer Mehrzahl zu einem Brennstoffzellenstapel zusammengefasster Brennstoffzellen wird der Brennstoff, insbesondere Wasserstoff H₂ oder ein wasserstoffhaltiges Gasgemisch der Anode zugeführt, wo eine elektrochemische Oxidation von H₂ zu H⁺ unter Abgabe von Elektronen stattfindet. Über den Elektrolyten oder die Membran, welche die Reaktionsräume gasdicht voneinander trennt und elektrisch isoliert, erfolgt ein Transport der Protonen H⁺ aus dem Anodenraum in den Kathodenraum. Die an der Anode bereitgestellten Elektronen werden über eine elektrische Leitung der Kathode zugeleitet. Der Kathode wird Sauerstoff oder ein sauerstoffhaltiges Gasgemisch zugeführt, so dass eine Reduktion von O₂ zu O²⁻ unter Aufnahme der Elektronen stattfindet. Gleichzeitig reagieren im Kathodenraum diese Sauerstoffanionen mit den über die Membran transportierten Protonen unter Bildung von Wasser.

Den Elektroden der Brennstoffzellen werden mittels Bipolarplatten die Reaktantengase zugeführt. Zusätzlich zu den Reaktantengasen wird aufgrund der bei der Brennstoffzellenreaktion erzeugten Wärme auch ein Kühlmedium durch die Bipolarplatten durchgeführt, so dass auf kleinstem Raum drei verschiedene Medien durch die Bipolarplatten geführt werden.

Bei der Versorgung der Brennstoffzellen mit den Reaktanten werden diese über Hauptkanäle (Ports) in die Bipolarplatten geleitet, die eine Verteilung der Reaktanten in einen aktiven Bereich bewirken soll, um mittels eines Flussfeldes die gesamte Fläche der Elektroden möglichst gleichmäßig zu versorgen. Da in dem Brennstoffzellenstapel mehrere Bipolarplatten mit den Membran-Elektroden-Einheiten gestapelt sind, werden Dichtungen eingesetzt, die die Hauptkanäle längs durch den Brennstoffzellenstapel abdichten. Zusätzlich muss eine gute Abdichtung gegenüber dem in Kühlmittelkanälen strömenden Kühlmedium erfolgen.

In der US 2007 / 0 269 697 A1 ist ein Brennstoffzellenaufbau mit Bipolarplatten beschrieben, bei der eine gewählte Membranelektrodenanordnung vorgesehen ist, um zwei unterschiedliche Gaskanäle auf beiden Seiten der Wellen auszubilden. Eine Separatorplatte für ein Brennstoffzellensystem, bei dem in einem Verteilbereich eine Vergleichmäßigung der Reaktionsmedienströme hervorgerufen werden soll, ist aus der DE 20 2016 107 302 U1 bekannt. Eine Bipolarplatte, bei dem die Stege eines Reaktionsmediums im Verteilbereich mit Unterbrechungen gebildet sind, ist aus der DE 10 2015 104 300 U1 bekannt.

Gerade der Führung des Kühlmediums über oder in den Bipolarplatten wurde bisher in der Entwicklungsphase eine geringere Bedeutung beigemessen als den Führungen für die Reaktantenströme. Dies hat zur Folge, dass konventionelle Bipolarplatten noch keine optimale Gleichverteilung für das Kühlmedium im Verteilbereich bereitstellen, sodass es vorkommen kann, dass aufgrund eines lokal vorhandenen nur niedrigen Volumenstroms eine lokale Überhitzung (ein sogenannter "Hotspot") auch im aktiven Bereich entstehen kann.

Die EP 2 348 567 A1, die DE 10 2014 206 333 A1, die US 2010/0028 42 A1 und die US 2019/0288302 A1 offenbaren Bipolarplatten mit sich kreuzenden Kühlmittelkanälen. US 2003/215695 zeigt eine Bipolarplatte mit kreuzungsfrei verlaufenden Kühlmittelkanälen, wobei die Steghöhe der Reaktionsmittelkanäle im Kreuzungsbereich nicht verringert sind.

Es ist daher die Aufgabe der vorliegenden Erfindung, eine Bipolarplatte und einen Brennstoffzellenstapel bereitzustellen, die eine gleichmäßige Verteilung nicht nur der Reaktionsmedien sondern auch des Kühlmittels begünstigen.

Diese Aufgabe wird mit einer Bipolarplatte mit den Merkmalen des Anspruchs 1 und durch einen Brennstoffzellenstapel mit den Merkmalen des Anspruchs 10 gelöst. Vorteilhafte Ausgestaltungen mit zweckmäßigen Weiterbildungen der Erfindung sind in den abhängigen Ansprüchen angegeben.

Die erfindungsgemäße Bipolarplatte zeichnet sich insbesondere dadurch aus, dass zur kreuzungsfreien Führung des Kühlmittels im Verteilbereich wenigstens die Eine der Einzelplatten an ihrer der Anderen der Einzelplatten zugewandten Plattenoberfläche in einem Kreuzungsbereich der Reaktionsmedienführungen mit einer Verringerung der Höhe der Stege gebildet ist, so dass zwei nebeneinander verlaufende Strömungskanäle durch die Verringerung strömungsmechanisch verbunden sind.

Zur Verteilung des Kühlmittels bleiben jeweils nur die Strukturen frei, die in einer der beiden Plattenhälften nicht bereits zur Gasverteilung genutzt werden, was im Prinzip alle diejenigen Flächen sind, in denen sich die Verteilstrukturen nicht überlappen. Es kann daher vorkommen, dass bei einer Überlappung der Verteilstrukturen auch eine Kreuzung der Kühlmittelführungen entsteht, sodass dort Verwirbelungen, mithin turbulente Strömungen erzeugt werden, die zu einer Ungleichverteilung des Kühlmittels führt. Dieser Ungleichverteilung wird durch die erfindungsgemäßen Verringerungen der Steghöhen im Kreuzungsbereich der Reaktionsmedienführungen entgegengewirkt. Durch die Unterbrechung der strömungsführenden Stege zwischen zwei Gaskanälen, wird die Strömung und die Gleichverteilung eingangsseitig des Verteilbereichs kaum beeinflusst. So können jedoch Kreuzströmungen im Kühlmittel vermieden werden, welche sonst einem zu hohen zusätzlichen Druckverlust durch eine Durchmischung zweier sich kreuzender Kühlmittelmedienströme unterliegen würden. Außerdem besteht die Möglichkeit, die Kühlmittelverteilung gezielt positiv zu beeinflussen, um eine optimale Gleichverteilung zu erzielen.

Es ist von Vorteil, wenn das Kühlmittel bis zu dem Kreuzungsbereich der Reaktionsmedien von einem Negativ der Einen der Einzelplatten geführt ist, und wenn das Kühlmittel ab dem Kreuzungsbereich der Reaktionsmedien von einem Negativ der Anderen der Einzelplatten geführt ist. Somit kann beispielsweise die Verteilung und Einleitung des Kühlmittels über den Verteilbereich mit Hilfe des Flussfeldes eines ersten Reaktionsmediums (beispielsweise des Brennstoffes/Anodenplatte) erfolgen, wobei im Kreuzungsbereich eine Übergabe des Kühlmittels an die Strömungsführungen des anderen Reaktionsmediums (zum Beispiel Luft/Kathodenplatte) kreuzungsfrei erfolgt.

In diesem Zuge ist es daher zweckmäßig und vorteilhaft, wenn das Kühlmittel bis zu dem Kreuzungsbereich von einem Negativ des Einen der Reaktantenflussfelder der Einzelplatten geführt ist, und wenn das Kühlmittel ab dem Kreuzungsbereich von einem Negativ des Anderen der Reaktantenflussfelder der Einzelplatten geführt ist.

Um eine gewünschte Gleichverteilung des Kühlmittels über den Verteilbereich und damit auch auf den aktiven Bereich hervorzurufen, ist es sinnvoll, wenn entlang der verringerungsfreien Stege der Einen der Einzelplatten eine Mehrzahl an Verringerungen der Höhe der Stege der Anderen der Einzelplatten vorliegt. Selbstverständlich ist auch dabei ebenfalls darauf zu achten, dass keine Kreuzungen der Strömungen des Kühlmittels erzeugt werden.

Um dies zu gewährleisten, ist es von Vorteil, wenn eine Anzahl der Verringerungen mit zunehmenden Strömungs-Abstand von ihrem zugehörigen Medienport abnimmt. Somit wird also bei fortlaufender Strömung des Brennstoffes oder bei fortlaufender Strömung des Kathodengases die Anzahl der Unterbrechungen der Stege reduziert, so dass eine Kreuzung des auf der Innenseite der Platte vorliegenden Kühlmittelstroms unterbunden ist.

Es ist auch von Vorteil, wenn die verringerungsfreien Stege der Einen der Einzelplatten mit zunehmenden Strömungs-Abstand von ihrem zugehörigen Medienport mit einer sich stufenweise verringernden Länge gebildet sind. Dadurch wird also ebenfalls eine Kreuzung des Kühlmittelstroms vermieden.

Es ist die Möglichkeit gegeben, dass der Kühlmittelstrom durch eine Mehrzahl der Kreuzungsbereiche mit der Verringerung der Steghöhe geleitet ist, und dass der Kühlmittelstrom an genau einem der Kreuzungsbereiche abgelenkt ist. Somit unterliegt also der Kühlmittel-Teil-Strom lediglich einer Umlenkung und wird nicht weiter aufgeteilt.

Um jedoch eine weitere Aufteilung des Kühlmittelstroms herbeizuführen, ist es von Vorteil, wenn der Kühlmittelstrom durch eine Mehrzahl der Kreuzungsbereiche mit der Verringerung der Steghöhe geleitet ist, und wenn der Kühlmittelstrom an wenigstens zwei der Kreuzungsbereiche abgeteilt ist.

Besonders wirksam lässt sich eine turbulente Strömung durch Kreuzungen von Kühlmittelströmen dadurch vermeiden, dass die Verringerung eine Steghöhe von null ausbildet; der Steg also vollständig unterbrochen wird ohne eine Durchmischung der Betriebsmedien hervorzurufen.

Die in Verbindung mit der erfindungsgemäßen Bipolarplatte erläuterten Vorteile, vorteilhafte Ausgestaltungen und Wirkungen, gelten in gleichem Maße für den erfindungsgemäßen Brennstoffzellenstapel, der mit einer Mehrzahl an Brennstoffzellen mit den erfindungsgemäßen Bipolarplatten ausgerüstet ist. Auch dieser zeichnet sich durch ein verbessertes Wärmemanagement aufgrund der Vermeidung von lokalen Überhitzungsstellen im Verteilbereich aus, die durch eine unterbundene Kreuzung von Kühlmittelteilströmen hervorgerufen werden könnten.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen. Dabei zeigen:
- Fig. 1: eine schematische Darstellung eines eine Mehrzahl von Brennstoffzellen aufweisenden Brennstoffzellenstapels mit den die Hauptkanälen zeigenden Bipolarplatten,
- Fig. 2: eine schematische Detaildarstellung des Schnitts II-II der Bipolarplatte aus Figur 1,
- Fig. 3: eine schematische Detail-Draufsicht auf den Verteilerbereich der Bipolarplatte, bei dem die Führung des ersten Reaktionsmediums gepunktet dargestellt ist und bei dem Führung des zweiten Reaktionsmediums gestrichelt dargestellt ist,
- Fig. 4: eine der Figur 3 entsprechende Darstellung auf den Verteilerbereich der Bipolarplatte, bei dem die Führung des ersten Reaktionsmediums gepunktet dargestellt ist, bei dem Führung des zweiten Reaktionsmediums gestrichelt dargestellt ist, und bei dem die Führung des Kühlmittels durchgezogen dargestellt ist,
- Fig. 5: eine Detailansicht des Verteilbereichs, an dessen Kreuzungsbereichen der Führungen der Reaktionsmedien Verringerungen der Steghöhe vorliegen, damit die Kühlmittelführung sich selbst nicht kreuzt, und
- Fig. 6: eine der Figur 5 entsprechende alternative Gestaltung der kreuzungsfreien Führung des Kühlmittels, bei der an mehreren Kreuzungsbereichen der Reaktionsmedien eine Abzweigung/Ableitung des Kühlmediums erfolgt.

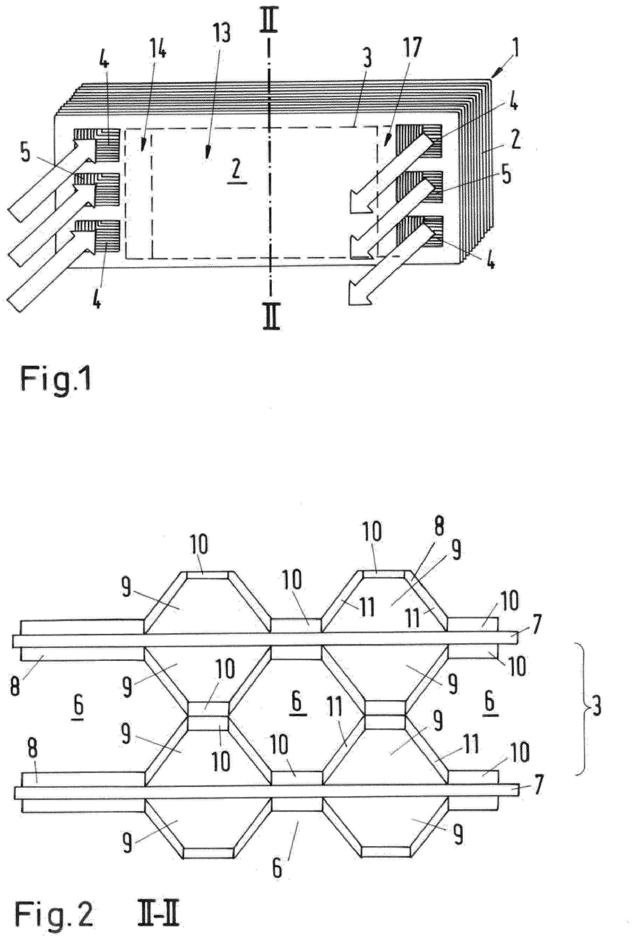

Ein in Figur 1 gezeigter Brennstoffzellenstapel 1 besteht aus einer Mehrzahl von in Reihe geschalteter Brennstoffzellen 2. Jede der Brennstoffzellen 2 umfasst eine Anode und eine Kathode sowie eine die Anode von der Kathode trennende protonenleitfähige Membran. Die beiden Elektroden zusammen mit der Membran bilden eine Membran-Elektroden-Anordnung 7 (kurz: MEA). Die Membran ist aus einem lonomer, vorzugsweise einem sulfonierten Tetrafluorethylen-Polymer (PTFE) oder einem Polymer der perfluorierten Sulfonsäure (PFSA) gebildet. Alternativ kann die Membran als eine sulfonierte Hydrocarbon-Membran gebildet sein.

Über Anodenräume innerhalb des Brennstoffzellenstapels 1 wird den Anoden Brennstoff (zum Beispiel Wasserstoff) zugeführt. In einer Polymerelektrolytmembranbrennstoffzelle (PEM-Brennstoffzelle) werden an der Anode Brennstoff oder Brennstoffmoleküle in Protonen und Elektronen aufgespaltet. Die Membran lässt die Protonen (zum Beispiel H⁺) hindurch, ist aber undurchlässig für die Elektronen (e⁻). An der Anode erfolgt dabei die folgende Reaktion: 2H₂ → 4H⁺ + 4e⁻ (Oxidation/Elektronenabgabe). Während die Protonen durch die Membran zur Kathode hindurchtreten, werden die Elektronen über einen externen Stromkreis an die Kathode oder an einen Energiespeicher geleitet. Über Kathodenräume innerhalb des Brennstoffzellenstapels 1 kann den Kathoden Kathodengas (zum Beispiel Sauerstoff oder Sauerstoff enthaltende Luft) zugeführt werden, so dass kathodenseitig die folgende Reaktion stattfindet: O₂ + 4H⁺ + 4e⁻ → 2H₂O (Reduktion/Elektronenaufnahme).

Dem Brennstoffzellenstapel 1 wird über eine Kathodenfrischgasleitung durch einen Verdichter komprimierte Luft zugeführt wird. Zusätzlich ist der Brennstoffzellenstapel 1 mit einer Kathodenabgasleitung verbunden. Anodenseitig wird dem Brennstoffzellenstapel 1 in einem Wasserstofftank bereitgehaltener Wasserstoff über eine Anodenfrischgasleitung zugeführt zur Bereitstellung der für die elektrochemische Reaktion in einer Brennstoffzelle 2 erforderlichen Reaktanten. Diese Gase werden an Bipolarplatten 3 übergeben, die für die Verteilung der Gase an die Membran und der Ausleitung Hauptkanäle 4 (Ports) aufweisen. Zusätzlich weisen die Bipolarplatten Hauptkühlmittelkanäle 5 (Ports) für die Durchleitung eines Kühlmediums in einem Kühlmittelkanal 6 auf, so dass auf kleinstem Raum drei verschiedene Medien geführt werden.

In Figur 1 sind also auch die jeweils zu Paaren zusammengefassten Hauptkanäle 4, 5 einer Mehrzahl den Brennstoffzellenstapel 1 bildenden Brennstoffzellen 2 mit Bipolarplatten 3 gezeigt.

Ein Detailausschnitt des Brennstoffzellenstapels 1 entlang des Schnittes II-II aus Figur 1 ist in Figur 2 gezeigt. Dieser Schnitt verläuft durch den aktiven Bereich 13 des Brennstoffzellenstapels 1. Der aktive Bereich 13 der Bipolarplatte 3 ist dabei selbstverständlich selbst nicht elektrochemisch aktiv, aber er ist zu denjenigen Konstituenten der Brennstoffzelle 2 benachbart angeordnet, bei welchen die elektrochemische Brennstoffzellenreaktion erfolgt. Es ist zu erkennen, dass die Bipolarplatte 3 in diesem aktiven Bereich 13 auf ihren voneinander wegweisenden Oberflächen die Reaktantenflussfelder aufweist, die sich gegenüberliegend angeordnet sind und damit eine gegenüberliegende Konfiguration ausbilden. Die Reaktantenflussfelder weisen jeweils eine Mehrzahl von durch Wandungen 11 von Stegen 10 begrenzten Strömungskanälen 9 für das jeweilige Reaktionsmedium auf. Die Stege 10 und die Strömungskanäle 9 der Einen der Einzelplatten 8 sind in diesem aktiven Bereich 13 also gegenüberliegend zu den Stegen 10 und den Strömungskanälen 9 der Anderen der Einzelplatten 8 verlaufend gestaltet. Auf diese Weise werden Kühlmittelkanäle 6 eines sich zwischen den Einzelplatten 8 erstreckenden Kühlmittelflussfelds gebildet.

Wenn das Kühlmittel in den Kühlmittelkanälen 6 nicht mit gleichem Druck oder mit gleichem Volumenstrom vorliegt, können Stellen einer lokalen Überhitzung (sogenannte "Hotspots") auftreten. Deshalb ist es erforderlich, den Kühlmittelstrom gleichmäßiger zu verteilen, um solche Stellen lokaler Überhitzung zu vermeiden. Hier setzt die erfindungsgemäße Bipolarplatte 3 an.

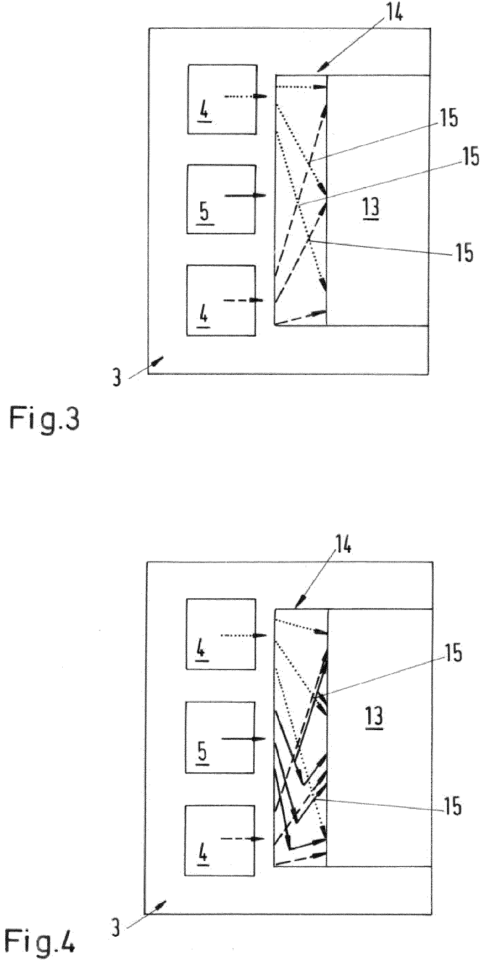

Aus Figur 3 wird ersichtlich, dass die erfindungsgemäße Bipolarplatte 3 zwischen ihren Hauptkanälen und dem aktiven Bereich 13 einen Verteilbereich 14 aufweist, in welchem eine sich bereichsweise überkreuzende Führung der beiden Reaktionsmedien vorliegt. Der Bereich, in welchem sich die Führungen der beiden Reaktionsmedien überkreuzen wird nachstehend als Kreuzungsbereich 15 bezeichnet.

Um zu gewährleisten, dass das Kühlmittel in diesem Verteilbereich 14 kreuzungsfrei geführt ist, ist wenigstens eine der Einzelplatten (8) an ihrer der Anderen der Einzelplatten 8 zugewandten Plattenoberfläche in den Kreuzungsbereichen 15 der Reaktionsmedienführungen mit einer Verringerung 16 der Höhe der Stege 10 gebildet, wobei die Höhe der Stege 10 auf null reduziert ist und somit eine vollständige Unterbrechung des betreffenden Stegs 10 vorliegt. Durch diese Verringerung 16 bzw. Unterbrechung werden zwei nebeneinander verlaufende Strömungskanäle 9 über die Verringerung 16 strömungsmechanisch miteinander verbunden.

In Figur 4 ist illustriert, dass bei der Bipolarplatte 3 das Kühlmittel bis zu dem Kreuzungsbereich 15 von einem Negativ der Einen der Einzelplatten 8 geführt ist, wobei das Kühlmittel ab dem Kreuzungsbereich 15 von einem Negativ der Anderen der Einzelplatten 8 geführt ist. Insbesondere kann dabei vorgesehen sein, dass das Kühlmittel im Verteilbereich 14 der Bipolarplatte 3 bis zu dem Kreuzungsbereich 15 von einem Negativ des Einen der Reaktantenflussfelder der Einzelplatten 8 geführt ist, und dass das Kühlmittel ab dem Kreuzungsbereich 15 von einem Negativ des Anderen der Reaktantenflussfelder der Einzelplatten 8 geführt ist.

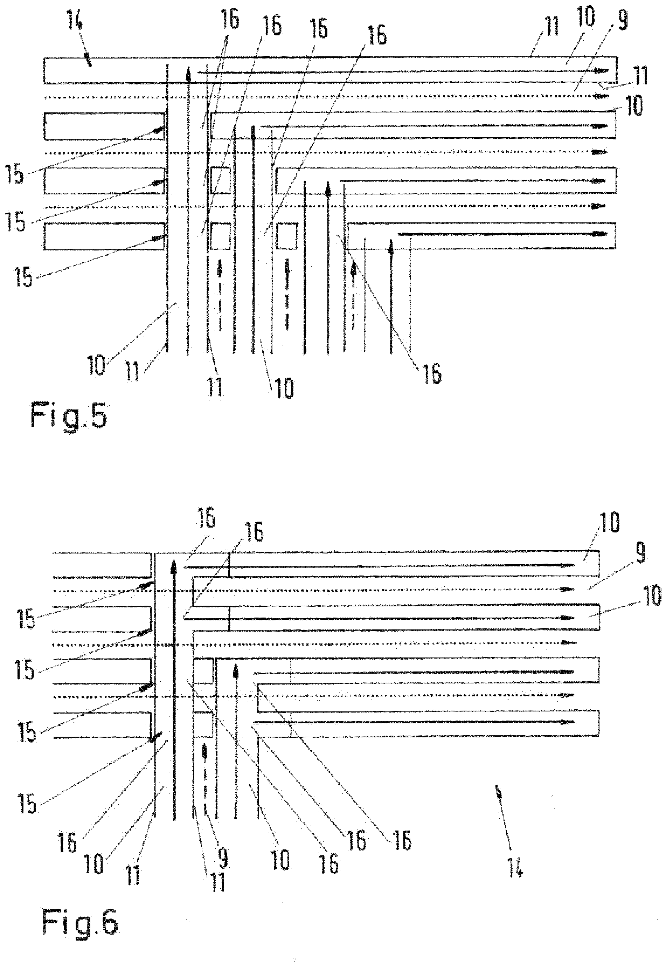

Die Figuren 5 und 6 verweisen auf die Möglichkeit, dass die Bipolarplatte 3 entlang der verringerungsfreien Stege 10 der Einen der Einzelplatten 8 eine Mehrzahl an Verringerungen 16 der Höhe der Stege 10 der Anderen der Einzelplatten 8 vorliegt, und dass die Anzahl der Verringerungen 16 mit zunehmenden Strömungs-Abstand von ihrem zugehörigen Medienport 4 abnimmt. Im Beispiel nach Figur 5 nimmt dabei die Anzahl von drei Verringerungen 16 auf zwei Verringerungen 16, und dann auf eine einzige Verringerung 16 ab (von links nach rechts). Dabei ist außerdem zu erkennen, dass die verringerungsfreien Stege 10 der Anderen der Einzelplatten 8 mit zunehmendem Strömungs-Abstand von ihrem zugehörigen Medienport 4 mit einer sich stufenweise verringernden Länge gebildet sind.

Figur 5 verweist ferner auf die Möglichkeit, dass der durchgezogen dargestellte Kühlmittelstrom durch eine Mehrzahl der Kreuzungsbereiche 15 mit der Verringerung 16 der Stehhöhe geleitet ist, und dass der Kühlmittelstrom an genau einem der Kreuzungsbereiche 15 abgelenkt ist, nämlich an einem Ende eines verringerungsfreien Stegs 11 des anderen Reaktionsmediums. Der Kühlmittelstrom ist folglich ungekreuzt vom Kühlmittelhauptkanal 5, über den Verteilbereich 14 an den aktiven Bereich 13 geführt.

Figur 6 verweist demgegenüber auf die Möglichkeit, dass der durchgezogen dargestellte Kühlmittelstrom durch eine Mehrzahl der Kreuzungsbereiche 15 mit der Verringerung 16 der Stehhöhe geleitet ist, und dass der Kühlmittelstrom an wenigstens zwei der Kreuzungsbereiche 15 abgeteilt ist. Der Kühlmittelstrom ist folglich ungekreuzt vom Kühlmittelhauptkanal 5, über den Verteilbereich 14 an den aktiven Bereich 13 geführt.

Im Ergebnis ist mit der vorliegenden Erfindung also eine Gleichverteilung der Wärme bereits im Verteilbereich 14 möglich, da das Kühlmittel gleichmäßig über die Bipolarplatte 3 und damit gleichmäßig über den gesamten Brennstoffzellenstapel 1 verteilt werden kann.

### BEZUGSZEICHENLISTE:

- 1: Brennstoffzellenstapel
- 2: Brennstoffzelle
- 3: Bipolarplatte
- 4: Hauptkanal für Reaktanten
- 5: Hauptkühlmittelkanal für Kühlmedium
- 6: Kühlmittelkanal
- 7: Membran-Elektroden-Anordnung (MEA)
- 8: Einzelplatte
- 9: Strömungskanal
- 10: Steg
- 11: Wandung
- 12: Durchtrittsöffnung
- 13: Aktiver Bereich
- 14: Verteilbereich
- 15: Kreuzungsbereich (Verteilbereich)
- 16: Verringerung
- 17: Sammelbereich

## Patentansprüche

1. Bipolarplatte (3) gebildet aus zwei miteinander verbundenen Einzelplatten (8),
die an ihren voneinander wegweisenden Plattenoberflächen jeweils mit einem Reaktantenflussfeld gebildet sind,
welches mehrere durch Wandungen (11) von Stegen (10) begrenzte Strömungskanäle (9) für ein Reaktionsmedium umfasst, wobei die Stege (10) und die Strömungskanäle (9) der Einen der Einzelplatten (8) in einem aktiven Bereich (13) gegenüberliegend zu den Stegen (10) und den Strömungskanälen (9) der Anderen der Einzelplatten (8) verlaufen, um so Kühlmittelkanäle (6) eines sich zwischen den Einzelplatten (8) erstreckenden Kühlmittelflussfelds zu bilden,
wobei die Reaktantenflussfelder und das Kühmittelflussfeld über einen außerhalb des aktiven Bereichs (13) liegenden Verteilbereich (14) jeweils mit einem Medienport (4, 5) strömungsmechanisch verbunden sind, und wobei im Verteilbereich (14) eine sich bereichsweise überkreuzende Führung der beiden Reaktionsmedien vorliegt,
**dadurch gekennzeichnet, dass**
zur kreuzungsfreien Führung des Kühlmittels im Verteilbereich (14) wenigstens eine der Einzelplatten (8) an ihrer der Anderen der Einzelplatten (8) zugewandten Plattenoberfläche in einem Kreuzungsbereich (15) der Reaktionsmedienführungen mit einer Verringerung (16) der Höhe der Stege (10) gebildet ist, so dass zwei nebeneinander verlaufende Strömungskanäle (9) durch die Verringerung (16) strömungsmechanisch verbunden sind.

2. Bipolarplatte (3) nach Anspruch 1, **dadurch gekennzeichnet, dass** das Kühlmittel bis zu dem Kreuzungsbereich (15) von einem Negativ der Einen der Einzelplatten (8) geführt ist, und dass das Kühlmittel ab dem Kreuzungsbereich (15) von einem Negativ der Anderen der Einzelplatten (8) geführt ist.

3. Bipolarplatte (3) nach Anspruch 1 oder 2, **dadurch gekennzeichnet, dass** das Kühlmittel bis zu dem Kreuzungsbereich (15) von einem Negativ des Einen der Reaktantenflussfelder der Einzelplatten (8) geführt ist, und dass das Kühlmittel ab dem Kreuzungsbereich (15) von einem Negativ des Anderen der Reaktantenflussfelder der Einzelplatten (8) geführt ist.

4. Bipolarplatte (3) nach einem der Ansprüche 1 bis 3, **dadurch gekennzeichnet, dass** entlang der verringerungsfreien Stege (10) der Einen der Einzelplatten (8) einen Mehrzahl an Verringerungen (16) der Höhe der Stege (10) der Anderen der Einzelplatten (8) vorliegt.

5. Bipolarplatte (3) nach Anspruch 4, **dadurch gekennzeichnet, dass** eine Anzahl der Verringerungen (16) mit zunehmenden Strömungs-Abstand von ihrem zugehörigen Medienport (4) abnimmt.

6. Bipolarplatte (3) nach Anspruch 4 oder 5, **dadurch gekennzeichnet, dass** die verringerungsfreien Stege (10) der Einen der Einzelplatten (8) mit zunehmendem Strömungs-Abstand von ihrem zugehörigen Medienport (4) mit einer sich stufenweise verringernden Länge gebildet sind.

7. Bipolarplatte (3) nach einem der Ansprüche 1 bis 6, **dadurch gekennzeichnet, dass** der Kühlmittelstrom durch eine Mehrzahl der Kreuzungsbereiche (15) mit der Verringerung (16) der Stehhöhe geleitet ist, und dass der Kühlmittelstrom an genau einem der Kreuzungsbereiche (15) abgelenkt ist.

8. Bipolarplatte (3) nach einem der Ansprüche 1 bis 6, **dadurch gekennzeichnet, dass** der Kühlmittelstrom durch eine Mehrzahl der Kreuzungsbereiche (15) mit der Verringerung (16) der Steghöhe geleitet ist, und dass der Kühlmittelstrom an wenigstens zwei der Kreuzungsbereiche (15) abgeteilt ist.

9. Bipolarplatte (3) nach einem der Ansprüche 1 bis 8, **dadurch gekennzeichnet, dass** die Verringerung (16) eine Steghöhe von null bildet.

10. Brennstoffzellenstapel (1) umfassend eine Mehrzahl an Brennstoffzellen (2) mit Bipolarplatten (3) nach einem der Ansprüche 1 bis 9.

## Claims

1. A bipolar plate (3) formed by two individual plates (8) connected to each other, which are each formed with a reactant flow filed on their plate surfaces facing away form each other, which comprises a plurality of flow channels (9) for a reaction medium bounded by walls (11) of webs (10), the webs (10) and the flow channels (9) of one of the individual plates (8) being arranged in an active region (13) opposite the webs (10) and the flow channels (9) of the flow channels (9) of one of the other individual plates (8), so as to provide channels (6) of a coolant flow field extending between the individual plates (8) the reactant flow fields and the coolant flow field each being fluidically connected to a media port (4,5) via a distribution region (14) located outside the active region (13), so that they cross one another in certain regions, **characterized in that**, for the purpose of guiding the coolant in the distribution region (14) without crossing at least one of the individual plates (8) on its plate surface facing the other of the individual plates (8) in a crossing region (15) of the reaction medium guides with a reduction (16) in the height of the webs (10), so that two flow channels (9) running side by side are flow-mechanically connected by the reduction (16).

2. The bipolar plate (3) according to claim 1, **characterized in that** the coolant is guided up to the crossing area (15) of a negative one of the individual plates (8), and **in that** the crossing area (15) is guided by a negative of the other of the individual plates (8).

3. The bipolar plate (3) according to claim 1 or 2, **characterized in** the coolant is guided up to the crossing area (15) of a negative one of the reactant flow fields of the individual plates (8), and **in that** the coolant is guided from the crossing region (15) onwards by a negative of the other of the reactant flow fields of the individual plates (8).

4. The bipolar plate (3) according to any one of claims 1 to 3, **characterized in that** along the reduction-free ridges (10) of the one of the individual plates (8) a plurality of reductions (16) in the height of the webs (10) of the other of the individual plates (8) is provided.

5. The bipolar plate (3) according to claim 4, **characterized in that** a number of reductions (16) decreases with increasing flow distance from its associated media port (4).

6. The bipolar plate (3) according to claim 4 or 5, **characterized in that** the length of the reduction-free webs (10) of one of the individual plates (8) his stepwise decreased with an increasing flow distance from their associated media port (4).

7. The bipolar plate (3) according to any one of the claims 1 to 6, **characterized in that** the coolant flow is directed through a plurality of the crossing regions (15) with the reduction (16) of the web height, and that the coolant flow is deflected at exactly one of the crossing areas (15).

8. The bipolar plate (3) according to any of the claims 1 to 6, **characterized in that** the coolant flow is directed through a plurality of the crossing regions (15) with the reduction (16) of the web height, and that the coolant flow is divided in at least two of the crossing regions (15).

9. The bipolar plate (3) according to any one of the claims 1 to 8, **characterized in that** the reduction (16) forms a web height of zero.

10. A fuel cell stack (1) comprising a plurality of fuel cells (2) having bipolar plates (3) according to any one of claims 1 to 9.

## Revendications

1. Plaque bipolaire (3) formée de deux plaques individuelles interconnectées (8), qui sont respectivement formées avec un champ d'écoulement de réactif sur leurs surfaces de plaque se faisant mutuellement face,
laquelle comprend plusieurs canaux d'écoulement (9) pour un milieu réactionnel délimités par des parois (11) de traverses (10), dans laquelle les traverses (10) et les canaux d'écoulement (9) de l'une des plaques individuelles (8) s'étendent dans une zone active (13) opposée aux traverses (10) et aux canaux d'écoulement (9) de l'autre des plaques individuelles (8), de manière à former des canaux de réfrigérant (6) d'un champ d'écoulement de réfrigérant s'étendant entre les plaques individuelles (8),
dans laquelle les champs d'écoulement de réactif et le champ d'écoulement de réfrigérant sont respectivement connectés fluidiquement à un orifice de milieu (4, 5) par l'intermédiaire d'une zone de distribution (14) située à l'extérieur de la zone active (13),
et dans laquelle un guidage des deux milieux de réaction se croisant par zones est présent dans la zone de distribution (14),
**caractérisée en ce que**
pour le guidage du réfrigérant dans la zone de distribution (14) sans croisement, au moins une des plaques individuelles (8) est formée sur sa surface de plaque faisant face à l'autre des plaques individuelles (8) dans une zone de croisement (15) des guidages de milieux réactionnels avec une réduction (16) de la hauteur des traverses (10), de sorte que deux canaux d'écoulement (9) adjacents sont connectés fluidiquement par la réduction (16).

2. Plaque bipolaire (3) selon la revendication 1, **caractérisée en ce que** le réfrigérant est guidé jusqu'à la zone de croisement (15) par un négatif de l'une des plaques individuelles (8), et **en ce que** le réfrigérant est guidé depuis la zone de croisement (15) par un négatif de l'autre des plaques individuelles (8).

3. Plaque bipolaire (3) selon la revendication 1 ou 2, **caractérisée en ce que** le réfrigérant est guidé jusqu'à la zone de croisement (15) par un négatif de l'un des champs d'écoulement de réactif des plaques individuelles (8), et **en ce que** le réfrigérant est guidé depuis la zone de croisement (15) par un négatif de l'autre des champs d'écoulement de réactif des plaques individuelles (8).

4. Plaque bipolaire (3) selon l'une quelconque des revendications 1 à 3, **caractérisée en ce que** le long des traverses (10) sans réductions de l'une des plaques individuelles (8), une pluralité de réductions (16) de la hauteur des traverses (10) de l'autre des plaques individuelles (8) est présente.

5. Plaque bipolaire (3) selon la revendication 4, **caractérisée en ce qu'**un certain nombre des réductions (16) diminue avec l'augmentation de la distance d'écoulement à partir de leur orifice de milieu correspondant (4).

6. Plaque bipolaire (3) selon la revendication 4 ou 5, **caractérisée en ce que** les traverses sans réductions (10) de l'une des plaques individuelles (8) sont formées avec une longueur se réduisant progressivement à mesure que la distance d'écoulement depuis leur orifice de milieu correspondant (4) augmente.

7. Plaque bipolaire (3) selon l'une quelconque des revendications 1 à 6, **caractérisée en ce que** le flux de réfrigérant est guidé à travers une pluralité des zones de croisement (15) avec la réduction (16) de la hauteur de traverse, et **en ce que** le flux de réfrigérant est dévié au niveau d'exactement une des zones de croisement (15).

8. Plaque bipolaire (3) selon l'une quelconque des revendications 1 à 6, **caractérisée en ce que** le flux de réfrigérant est guidé à travers une pluralité des zones de croisement (15) avec la réduction (16) de la hauteur de traverse, et **en ce que** le flux de réfrigérant est divisé au niveau d'au moins deux des zones de croisement (15).

9. Plaque bipolaire (3) selon l'une quelconque des revendications 1 à 8, **caractérisée en ce que** la réduction (16) forme une hauteur de traverse nulle.

10. Empilement de piles à combustible (1) comprenant une pluralité de piles à combustible (2) avec des plaques bipolaires (3) selon l'une quelconque des revendications 1 à 9.
